# EUROPEAN PATENT APPLICATION

(11) **EP 1 465 129 A1**
(43) Date of publication of application: **06.10.2004**
(21) Application number: 04251986.8
(22) Date of filing: 01.04.2004
(51) Int. Cl.: G07F 19/00, G06F 17/60

(54) **Bill payment and payee information management system and method**

(30) Priority: 02.04.2003 US 405371
(71) Applicant: Metavante Corporation, Brown Deer, Wisconsin 53223 (US)
(72) Inventor: Fitzgerald, Daleen R., Brookfield, WI 53005 (US); Pateneaude, Timothy J., Milwaukee, WI 53211 (US); Dryburgh, Walter Scott III, Brookfield, WI 53005 (US); Srinivasan, Shankar, Saratoga, CA 95070 (US); Amalraj, Peter, San Jose, CA 95135 (US); Parimi, Venkatarama Satya, San Jose, Ca 95134 (US); Luebke, Lisa M., West Allis, WI 53214 (US); Zisman, Eugene N., Milwaukee, WI 53225 (US); Ramey, Nicole M., Milwaukee, WI 53225 (US); Cesarz, Kelly A., West Allis, Wi 53219 (US)
(74) Representative: Roberts, Gwilym Vaughan

(57) **Abstract**

An improved system (80) and an associated method for entering, updating, and maintaining information relating to payees is disclosed which includes data supplied by consumers (52), data contained in biller invoices, and data relating to the mechanisms to be used for payment of billers. The payee information management system (80) of the present invention maintains proprietary biller remittance information in a database (92) which is separate from the database (84) containing consumer/payee information which has been provided by consumers (52), eliminating the need to place remittance information in entries for each payee of each consumer (52), thereby making the consumer/payee database (84) substantially smaller and more efficient.
The payee information management system of the present invention also has a standard set of payee data which is available to send to third parties to obtain further bill payment business without requiring that proprietary biller remittance information be divulged.

## Description

### BACKGROUND OF THE INVENTION

Field of the Invention -- The present invention relates generally to the electronic payment of bills such as, for example, in an electronic bill presentment and payment system, and more particularly to an improved system and an associated method for entering, updating, and maintaining information relating to payees including data supplied by consumers, data contained in biller invoices, and data relating to the mechanisms to be used for payment of billers.

Electronic bill payment is a service which has been growing steadily for at least the past fifteen years, but at a rate which has been significantly slower than anticipated. In view of the fact that the typical consumer spends an average of two hours per month paying his/her share of the eighteen billion bills a year that are sent to consumers in the U.S. alone, the reasons for the enormous potential of electronic bill payment are readily apparent. The cost of sending conventional bills and paying conventionally are high for both businesses and consumers. Businesses in the U.S. alone send or receive over twenty-six billion bills a year at a cost exceeding seventeen billion dollars annually. In the process of paying these bills, consumers in the U.S. alone spend more than six billion dollars annually in postage.

In addition, banks spend a large amount of money on the processing of paper checks, and they are not reimbursed for this cost by those consumers who have free checking. Thus, the potential beneficial effect of electronic bill payment for cost reduction and revenue production to all participants -- billers, consumers, banks, and service providers -- represents a tremendous opportunity for the financial industry. This financial opportunity has been expanding the market for electronic bill payment via the Internet, and is expected to expand even more rapidly in the years to come. Most banks lack the infrastructure to develop such services internally, and accordingly outsource these services from service providers which are able to take advantage of the economies of scale.

Due to the slower than anticipated rate of adoption of electronic bill payment, service providers in the industry have experienced slow growth and earnings which are lackluster at best. Since many billers have not presented their bills electronically, limiting the opportunity for consumers to view and pay their bills online to relatively few companies, there has not been sufficient encouragement to consumers to select the online bill payment solution. A relatively recent trend which has expanded online bill payment opportunities significantly is the addition of bill presentment capabilities, in which consumers can receive and/or view their bills online as well as pay them, with the improved systems being referred to as bill presentment and payment ("BPP") systems or electronic bill presentment and payment ("EBPP") systems.

One of the first EBPP systems was the biller direct model, in which each biller individually presents its bills directly to consumers who log onto the biller website to review and pay bills. Optionally, the biller may also send each customer an e-mail containing either the entire bill or a summary. Since in direct biller systems the consumer must navigate a different website each month to pay each bill, and must remember user names and passwords for each website, adoption of direct biller systems by consumers has for the most part been less than anticipated.

Four additional electronic presentment and payment systems are being used: consumer service provider ("CSP") systems, biller service provider ("BSP") systems, consolidator systems, and direct pay systems. In consumer service provider systems, consumers can receive bills from a number of different billers through a single front end billing interface. The user interface, which is typically web-based, provides consumers with the necessary tools and options to carry out the receipt and payment of bills.

Biller service provider ("BSP") systems are biller-oriented applications that consumers can access to receive and pay bills. Many biller service providers host bills from multiple billers, but a separate logon by consumers is still required for each of the multiple billers accessed. Biller service providers systems and direct biller systems are the most popular electronic bill payment systems at the present time. Consolidators push bills to any service provider willing to supply them to consumers, and collect payment information which is submitted to payment processors for payment. Direct pay systems, also known as "pay anyone" services, allow a consumer to log onto a pay anyone service provider website and enter billing information received independently of the service and account information to pay the bill.

Each of these "payment requesting sources", can be a source of consumers for a service provider in the business of processing payments. These payment requesting sources manage their own consumer front-ends as well as collect data from consumers for payment requests submitted by the consumers. They typically manage consumer demographics and preferences, and payee information. The payment requesting sources may also provide "good or guaranteed funds" processing, establish payment limits, and warehouse future scheduled payments. They also may edit the consumers' payment requests to ensure that they meet the constraints established by payees.

Frequently, service providers in the business of bill payment also have their own front end(s) in addition to accepting payment requests from the payment requesting sources mentioned above. Such service providers provide at least one of two services necessary for the payment of bills, namely the creation of bill payment instructions and the transmission of those bill payment instructions to payment processors who execute the payment process. The processing of the payment is performed in a variety of ways, including electronically through ACH, credit card transactions, and other electronic settlement systems such as MasterCard's RPPS and Visa's ePay, or debit card transactions, or physically by using check and draft print and mail providers.

The preparation of bill payment instructions by the service provider is accomplished by using personal payee data (consumer demographics and preferences) which has been received from the consumer making the payment and placed into a consumer data database for storage, and consumer payee and remittance data which is maintained by the bill payment service provider in a consumer/payee and remittance database. The payment instruction is sent to a payment processor. Remittance advices are created if needed (for multiple payments made to a single payee in a single payment for efficiency) and may be sent either directly to the appropriate payees or via a third party payment processing network.

The consumer/payee and remittance database of the bill payment service provider contains entries for each payee of each consumer serviced by the bill payment service provider (hence the use of the term consumer/payee). Thus, it will be appreciated that remittance data must be maintained within each consumer/payee entry in the consumer payee and remittance database. Since remittance information may well have been developed by the service provider over time at considerable expense to make payments more accurately and efficiently, such remittance information is necessarily viewed by the service provider as being highly proprietary. It is disadvantageous as well as inefficient to require that this proprietary data be stored in each and every consumer/payee entry or warehoused on the payment requesting source (a CSP or other consumer-focused front end).

In addition, the bill payment service provider will often choose to enter its own remittance data into the consumer/payee and remittance database. If this remittance data is used to replace consumer/payee data, it will cause consumer confusion and calls to customer support, which results in an additional cost burden. If this remittance data is placed into other fields in the consumer/payee and remittance database, the result is that each entry takes even more space in the database. In addition, it is desirable to have payee data which is normally found on an invoice or statement be available to display to consumers who are entering new payees to allow them to chose a payee, in which case the payee data can be used as is or only slightly modified.

Finally, with the consumer/payee and remittance database, there is no unique standard set of payee data which can be sent to any of the third parties mentioned above (consumer service providers, direct pay providers, biller service providers, and consolidators). This is because the consumer/payee and remittance database contains proprietary biller remittance information, which the bill payment service provider does not want to disclose to third parties which are potential competitors. Thus, the bill payment service provider is placed in the untenable position of having to chose between having fewer customers or disclosing its proprietary biller remittance information to third party competitors.

It is accordingly the primary objective of the present invention that it maintain proprietary biller remittance information in a database which is separate from the database containing consumer/payee information which has been provided by consumers. It is a related objective of the present invention that it eliminate the need to place remittance information in entries for each payee of each consumer, thereby making the consumer/payee database substantially smaller and more efficient. It is a further related objective of the present invention that it not require the maintenance of double fields in the consumer/payee database, thereby further minimizing the size of the consumer/payee database.

It is a further objective of the present invention that it not replace any of the information relating to payees which is provided by consumers, allowing all consumer-entered information to remain in the consumer/payee database, thereby preventing consumer confusion and the resulting calls to customer service. It is a yet further objective of the present invention that it provide payee data which is normally found on an invoice or statement to consumers to allow them to select from, or parse to, previously known payees or modify information from such known payee entries rather than always require them to enter all information about each payee. It is a still further objective of the present invention that it have a standard set of payee data which is available to send to third parties such as consumer service providers, direct pay providers, biller service providers, and consolidators to obtain further bill payment business without requiring that proprietary biller remittance information be divulged.

The payee information management system of the present invention must also be highly reliable and stable, and it should also provide the highest possible degree of security during its normal operation. Further, the system should show no degradation in consumer experience while maintaining security, usability, and control over proprietary information. In order to enhance the market appeal of the payee information management system of the present invention, it should also be inexpensive to implement to thereby afford it the broadest possible market. Finally, it is also an objective that all of the aforesaid advantages and objectives of the payee information management system of the present invention be achieved without incurring any substantial relative disadvantage.

### SUMMARY OF THE INVENTION

The disadvantages and limitations of the background art discussed above are overcome by the present invention. With this invention, the existing consumer data database and consumer/payee data database are supplemented by one additional database, or in the preferred embodiment by two additional databases. The first additional database is a biller remittance data database which is used by the bill payment service provider to store proprietary biller remittance information separately from the database containing consumer/payee information which has been provided by consumers. The second additional database, which is used in the preferred embodiment of the payee information management system of the present invention, is a master payee database which is used by the bill payment service provider to store a standard set of payee data which is available to send to third parties.

The consumer data database includes demographic and preference data entered by consumers. Accordingly, the entry in the consumer data database for each customer will typically include at least the customer's name and address and information identifying the account from which funds will be drawn to pay bills. The consumer/payee data database includes information relating to payees which is selected, entered and parsed from a list, or independently entered, by consumers. Each entry in the consumer/payee data database will typically include at least the payee name and address, the consumer's account number, and information identifying a default method of making payment.

The biller remittance data database is used to store proprietary remittance data for billers which has been developed by the bill payment service provider to accomplish payment of each biller in a preferred manner which maximizes the efficiency and minimizes the cost of making payment to that biller. Each entry in the biller remittance data database will typically include at least information identifying the preferred manner of payment for the biller and information sufficient to make the payment to the biller in the preferred manner.

The master payee data database is used to store payee data which is contained in the biller statements which are sent to consumers. Each entry in the master payee data database will typically include the name and address of the payee, remittance information identifying how the payment will be made, and additional information helpful in the event of disputes or questions relating to a statement.

In the payee information management system of the present invention, the databases are linked together bidirectionally in a logical progression through the use of keys contained in each entry in each of the three or four databases. The entries in the consumer data database and the entries in the consumer/payee data database are linked together through the use of corresponding links in both of these databases. In the preferred embodiment of the payee information management system of the present invention, the entries in the consumer/payee database and the entries in the master payee data database are linked together through the use of corresponding links in both of these databases, and the entries in the master payee data database and the entries in the biller remittance data database are linked together through the use of corresponding links in both of these databases.

In the preferred embodiment of the payee information management system of the present invention, the payee information contained in the master payee data database is available for two beneficial purposes. First, the payee information contained in the master payee data database is provided to consumers in the process of entering information on payees which the consumers desire to pay using the bill payment system described herein. The consumers may select payees included in the master payee data database, they may enter data and have it parsed to payees included in the master payee data database, they may use the payee information contained in the master payee data database as the starting point for an entry by modifying the database's information about a payee, or they may independently enter information about a payee without using the payee information contained in the master payee data database.

Second, the payee information contained in the master payee data database may be provided to third parties such a consumer service providers, direct pay providers, biller service providers, and consolidators. This has the beneficial effect of acting as an inducement to increase the amount of business available to the bill payment service provider from these third parties. Since the master payee data does not include the bill payment service provider's proprietary remittance information (which is contained in the biller remittance data database, which is not shared either with consumers or with third parties), there is no danger of the proprietary nature of the biller remittance data being compromised.

In the embodiment which omits the master payee data database, the entries in the consumer/payee database and the entries in the biller remittance data database are linked together through the use of corresponding links in both of these databases. In this embodiment, the consumers must enter information about each payee they desire to pay using the system, with no choice of entries and no ability to modify a entry from a master list being available. However, this embodiment protects the bill payment service provider's proprietary remittance information, eliminates the need to keep remittance information in each entry in the consumer/payee data, and avoids consumer confusion since entries in the consumer/payee data are never modified by the bill payment service provider. Thus, this embodiment, while less advantageous than the preferred embodiment, is still highly beneficial when compared to the previous system and method.

The consumer/payee data database, the master payee data database, and the biller remittance data database are thus all used to store information relating to the accomplishment of remittance of funds to payees. All three of these databases contain different aspects of payee remittance information, and the data contained in them for each payee would normally be expected to be different from the data contained for the same payee in the other two databases. For example, the master payee data contained for a payee includes all of the information obtained from a statement including a way to make payment, while the consumer/payee data for that payee would normally include less information than contained in the master payee data, and the biller remittance data will contain information relating to the preferred (most efficient and lowest cost) way to make payment to the payee.

The payee information management system of the present invention also includes an additional aspect in both embodiments thereof. This additional aspect is the use of an automated system to create new master payee data entries for multiple consumer/payee data entries for the same payee, as well as linking consumer/payee data entries to the proper master payee data entry.

It may therefore be seen that the present invention teaches a payee information management system which maintains proprietary biller remittance information in a database which is separate from the database containing consumer/payee information which has been provided by consumers. The payee information management system of the present invention eliminates the need to place remittance information in entries for each payee of each consumer, thereby making the consumer/payee database substantially smaller and more efficient. The payee information management system of the present invention also does not require double fields to be contained in the consumer/payee database, thereby further minimizing the size of the consumer/payee database.

The payee information management system of the present invention allows all consumer-entered information to remain in the consumer/payee database rather than replacing any of it, thereby preventing consumer confusion and thereby minimizing calls to customer service. The payee information management system of the present invention makes existing payee data accessible to consumers to allow them to select from, or parse to, previously known payees or modify information from such known payee entries rather than always require them to enter all information about each payee. The payee information management system of the present invention also has a standard set of payee data which is available to send to third parties such as consumer service providers, direct pay providers, biller service providers, and consolidators to thereby obtain further bill payment business without requiring that proprietary biller remittance information be divulged.

The payee information management system of the present invention is highly reliable and stable, and will also provide the highest possible degree of security during its normal operation. Further, the payee information management system has no degradation in consumer experience while maintaining security, usability, and control over proprietary information. The payee information management system will contribute to higher efficiencies and lower costs in payment processing due to an increased proportion of electronic payments, cleaner payee data, and less consumer confusion. The payee information management system of the present invention is also inexpensive to implement to enhance its market appeal and to thereby afford it the broadest possible market. Finally, all of the aforesaid advantages and objectives of the payee information management system of the present invention are achieved without incurring any substantial relative disadvantage.
The invention further comprises a method of managing information relating to a plurality of payees for an proprietary electronic bill payment system, said method comprising steps of storing consumer/payee information in a consumer/payee database, wherein said consumer/payee information includes payee remittance information which is obtained from consumers storing master payee information in a master payee database, wherein said master payee information includes payee remittance information which is available from payee billing statements storing payee remittance information in a biller remittance database which is accessible only by the electronic bill payment system receiving requests from consumers to pay bills to designated payees contained in said consumer/payee database determining whether payee remittance information exists in said biller remittance database for each designated payee to which a request from a consumer to pay a bill has been received creating a bill payment instruction for each request from a consumer to pay a bill based upon payee remittance information contained in said biller remittance database if payee remittance information for the designated payee exists in said biller remittance database if payee remittance information for the designated payee does not exist in said biller remittance database, determining whether payee remittance information exists in said master payee database for the designated payee to which a request from a consumer to pay a bill has been received if payee remittance information for the designated payee does not exist in said biller remittance database and payee remittance information for the designated payee does exist in said master payee information, creating a bill payment instruction for the request from a consumer to pay a bill based upon master payee information contained in said master payee database if payee remittance information for the designated payee does not exist in said biller remittance database and payee remittance information for the designated payee does not exist in said master payee information, creating a bill payment instruction for the request from a consumer to pay a bill based upon consumer/payee information contained in said consumer/payee database and sending bill payment instructions which have been created to a bill payment processor for execution by said bill payment processor.
The invention further comprises a method of managing payee information for a proprietary electronic bill payment system, said method comprising steps of storing payee information which is obtained from consumers in a consumer/payee database storing proprietary payee remittance information in a biller remittance database storing master payee information which is available from payee billing statements in a master payee database receiving requests from consumers to pay bills to payees described in payee information contained in said consumer/payee database creating a bill payment instruction for each request from a consumer to pay a bill based upon payee remittance information contained in the first of said biller remittance database, said master payee database, and said consumer/payee database in which payee remittance information for the payee exists and sending bill payment instructions which have been created to a bill payment processor for execution by said payment processor.
The invention further comprises a method of managing payee information for a proprietary electronic bill payment system, said method comprising steps of storing payee information which is obtained from consumers in a consumer/payee database storing master payee information which is available from payee billing statements in a master payee database storing proprietary payee remittance information in a biller remittance database determining payee remittance information to be used to pay a bill for designated payees from the first of said biller remittance database, said master payee database, and said consumer/payee database in which payee remittance information for the designated payees exists.
The invention further comprises a method of managing payee information for an electronic bill payment system, said method comprising steps of storing proprietary payee remittance information as a first data set which is accessible only by the electronic bill payment system and storing master payee information as a second data set, wherein said master payee information includes remittance information obtained from payee statements storing consumer/payee information as a third data set, wherein said consumer/payee information includes payee remittance information which is obtained from consumers establishing links between at least two pairs of said first, second, and third data sets wherein payee remittance information used in paying bills to designated payees is available from the first of said first, second, and third data sets in which payee remittance information is available for the designated payees.
The invention further comprises a system for managing information relating to a plurality of payees in an electronic bill payment system, said system comprising a consumer/payee database storing consumer/payee information which includes payee remittance information obtained from consumers a biller remittance database storing payee remittance information which is accessible only by the electronic bill payment system a bill payment construction element which receives requests from consumers to pay bills to payees contained in said consumer/payee database, said bill payment construction element creating a bill payment instruction for each request from a consumer to pay a bill based upon payee remittance information contained in said biller remittance database if payee remittance information for the payee exists in said biller remittance database, said bill payment construction element creating a bill payment instruction for each request from a consumer to pay a bill based upon payee remittance information contained in said consumer/payee database if payee remittance information for the payee does not exist in said biller remittance database, said bill payment construction element sending bill payment instructions which have been created to a bill payment processor.

### DESCRIPTION OF THE DRAWINGS

Embodiments of the invention will now be described, by way of example, with reference to the drawings of which:

Fig. 1 is a functional schematic diagram showing components of presently known electronic bill presentment and payment systems, including components utilized for storing and managing information regarding payees;

Fig. 2 is a functional schematic diagram showing components of electronic bill presentment payment systems similar in scope to those illustrated in Fig. 1, but with components for storing and managing information regarding payees taught by the preferred embodiment of the payee information management system of the present invention;

Fig. 3 is a functional schematic diagram showing the various databases utilized by the payee information management system illustrated in Fig. 2 and the linkages therebetween, as well as the provision of master payee data to third parties;

Fig. 4 is a functional schematic diagram showing examples of the types of data included in the databases illustrated in Fig. 3;

Fig. 5 is a functional schematic diagram showing the hierarchical structure in which payees are organized to facilitate selection of a payee in the master payee database of the payee information management system illustrated in Fig. 2;

Fig. 6 is a flow diagram showing a process in which a consumer initially enrolls in the electronic bill presentment and payment system illustrated in Fig. 2 and files for maintaining consumer data and consumer payee data are created in that system;

Fig. 7 is a flow diagram showing a process in which a consumer may edit consumer data previously provided and stored in the payee information management system illustrated in Fig. 2;

Fig. 8 is a flow diagram showing processes in which a consumer may enter or modify information relating to a payee in the payee information management system illustrated in Fig. 2;

Fig. 9 is a flow diagram showing a manual review process by which the payee administration element of the payee information management system illustrated in Fig. 2 may evaluate payee information and modify consumer/payee and master payee entries to create cross links therebetween;

Fig. 10 is a flow diagram showing the process by which the data cleanup module of the payee information management system illustrated in Fig. 2 matches payees described by payee information entered by consumers with payees included in the master payee database;

Fig. 11 is a flow diagram showing the process by which the data cleanup module of the payee information management system illustrated in Fig. 2 consolidates identical payees described by payee information entered by consumers;

Fig. 12 is a flow diagram showing the process by which the bill payment construction module of the payee information management system illustrated in Fig. 2 fulfills a consumer payment request using payee information from the various databases; and

Fig. 13 is a functional schematic diagram similar to Fig. 1, but showing components for storing and managing information regarding payees taught by an alternate embodiment of the payee information management system of the present invention without using a master payee database.

### DETAILED DESCRIPTION OF THE PREFERRED EMBODIMENT

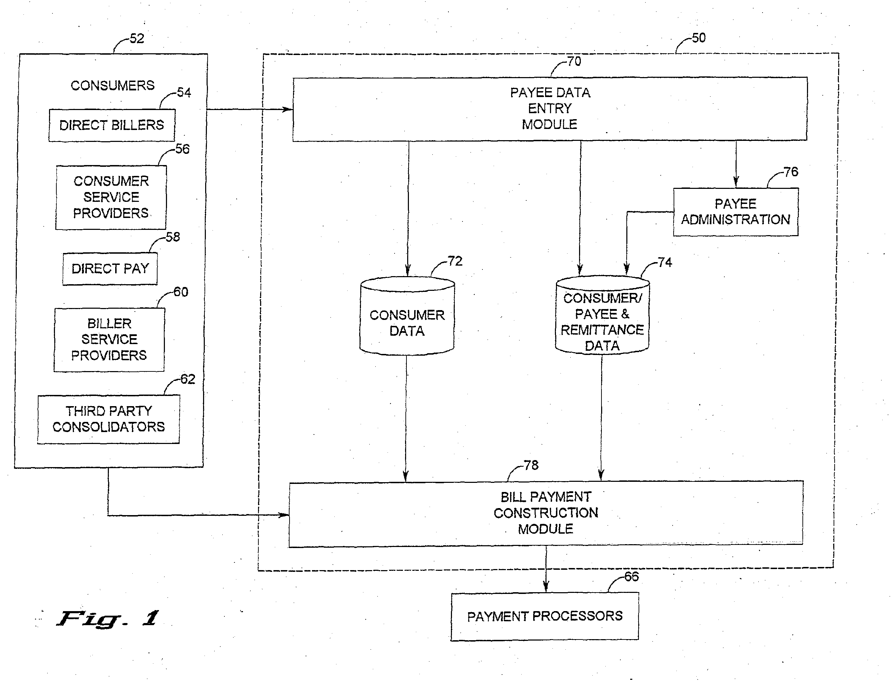

Prior to a discussion of the payee information management system of the present invention, it is helpful to review the presently known manner of operation for a service provider in the business of creating bill payment instructions on behalf of consumers. Referring to Fig. 1, one such presently known electronic bill presentment and payment (EBPP) system 50 is illustrated, showing its components used for storing and managing information regarding payees. The presently known EBPP system 50 works in conjunction with two external components, the first of which is of course consumers, which are designated generally by the reference numeral 52.

The consumers 52 fall generally into five different classes, which are indicative of the source of the consumers 52 to the EBPP system 50. The consumers 52 are supplied to the EBPP system 50 from direct billers 54, consumer service providers 56, direct pay providers 58, biller service providers 60, and third party consolidators 62. The direct billers 54 are billing entities for which the EBPP system 50 is providing bill payment services. The consumer service providers 56 are consumer-oriented front end applications which provide consumers with an Internet-accessible user interface to receive and pay bills, and include eBanking systems as well as other similar portals. Such customer service providers 56 include (but are not limited to) service providers which scan paper bills and present them in electronic form.

The direct pay providers 58 allow consumers to enter billing information that they have received independently of any bill presentment function, and pay such manually-entered billers. The biller service providers 60 are biller-oriented applications which consumers can access to carry out bill presentation and payment functions for the biller(s) that are serviced by the biller service providers 60. The third party consolidators 62 are other EBPP-related services providers, presenting bills and collecting payment information and submitting such payment requests to a bill payment service provider such as the EBPP system 50.

It is important to note that the EBPP system 50 will accept requests for bill payment from multiple ones of each of the direct billers 54, the consumer service providers 56, the direct pay providers 58, the biller service providers 60, and the third party consolidators 62. It will be apparent to those skilled in the art that the operator of the EBPP system 50 may also be an operator of any or all of the five sources of the consumers 52.

The second external component are one or more payment processors 66 which execute payment instructions received from the EBPP system 50. The payment processors 66 can deliver funds to the payee electronically. Examples of payment processors are MasterCard's RPPS, Visa's ePay, automated clearing houses, and print and mail check payment services.

Turning now to the components within the EBPP system 50, it may be seen that there are five components contained within the EBPP system 50, two of which are databases. Data from the consumers 52 is supplied to a payee data entry module 70. The data provided by the consumers 52 to the payee data entry module 70 falls into two classes, the first of which is referred to as "consumer data," which is demographic and preference data which is entered by the consumers 52 regarding themselves. The second type of data provided by the consumers 52 to the payee data entry module 70 is consumer/payee data, which is consumer-provided information relating to payees. Consumer/payee data may be entered by the consumers 52.

The consumer data, which is the demographic and preference data entered by the consumers 52 regarding themselves, is stored in a consumer data database 72. The consumer/payee data, which is consumer-provided information relating to payees, is stored in a consumer/payee and remittance data database 74. Consumer data is provided by the payee data entry module 70 to the consumer data database 72, and consumer/payee data is provided by the payee data entry module 70 to the consumer/payee and remittance data database 74.

A payee administration function 76 serves to review newly added consumer/payee data and to correct obvious errors. The payee administration module 76 also obtains remittance data from the billers. The remittance data is information which enables payment of bills to specific payees, and generally includes additional information not found in the consumer/payee data. For example, while the customer/payee data may include information allowing payment to a payee by mail, the remittance data may provide information which would enable electronic payment, which is advantageous in that it is simpler and cheaper to implement.

Consumer data from the consumer data database 72 and consumer/payee data and remittance data from the consumer/payee and remittance data database 74 are provided to a bill payment construction module 78. Payment requests, which are requests regarding payment of specific bills on behalf of specific consumers 52, are also provided by the consumers 52 to the bill payment construction module 78. The bill payment construction module 78 creates payment instructions and remittance advices and provides the payment instructions and remittance advices to the payment processors 66. The payment instructions are instructions to perform a specific payment transaction, and are in a particular format required for execution by a payment processor 66. The remittance advice are listings for the payee of accounts, amounts, and dates that are particularly useful when a single payment is made on behalf of a number of different customers 52 for a number of different bills.

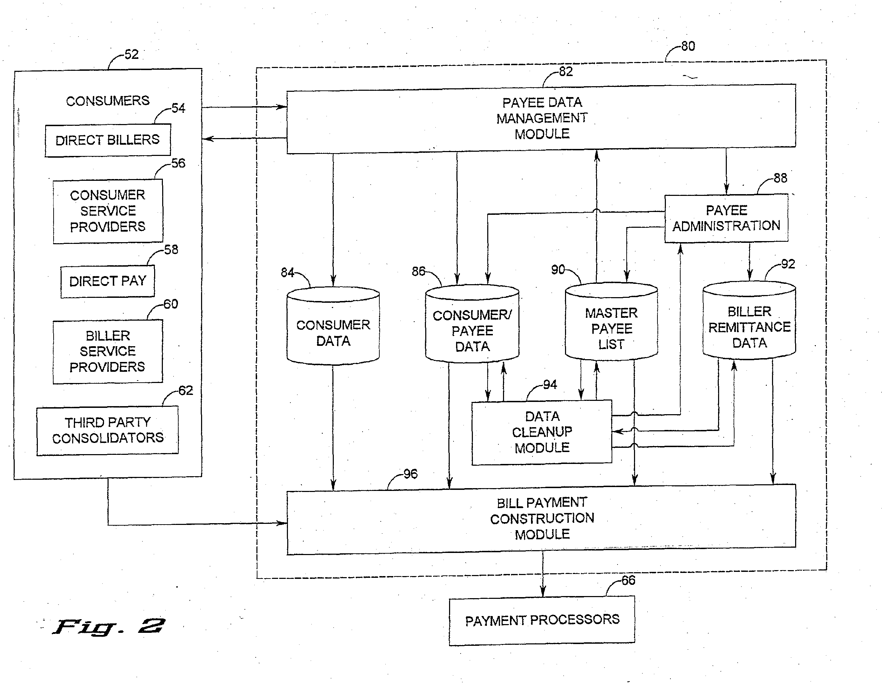

The preferred embodiment of the payee information management system of the present invention is illustrated in Fig. 2. An EBPP system 80 replaces the EBPP system 50 of Fig. 1, and may be seen to have a number of different components contained therein. Like the EBPP system 50, the EBPP system 80 also interacts with the consumers 52 and the payment processors 66. The EBPP system 80 contains a payee data entry module 82 which obtains consumer data and consumer/payee data from the consumers 52.

The consumer data, provided by the consumers 52 to the payee data entry module 82, is then provided from the payee data entry module 82 to a consumer data database 84 for storage therein. The consumer/payee data, also provided by the consumers 52 to the payee data entry module 82, is then provided from the payee data entry module 82 to a consumer/payee database 86. It will be immediately noted that the consumer/payee database 86 is solely for the storage of consumer/payee data provided by consumers, and as such does not include remittance data or any other data developed by the EBPP system 80 or any of its components.

A payee administration function 88 serves to review newly added consumer/payee data and to correct any obvious errors. The payee administration module 76 also obtains remittance data from the billers. Payee information which is contained in biller statements, which may well contain additional information not provided by the consumers 52, will be supplied to a master payee list database 90 for storage therein. Payee remittance date which is developed by the payee administration function 88 will be supplied to a biller remittance data database 92 for storage therein. Thus, it will at once be appreciated that data which was at one time stored in a single database (namely the consumer/payee and remittance data database 74 of Fig. 1) is now stored in three separate databases, namely the consumer/payee database 86, the master payee list database 90, and the biller remittance data database 92.

In order to synchronize data between the three databases, the payee administration function 88 will also key the databases to each other. This keying may be the initial keying, or it may be modified keying which links database entries which were formerly not known to be for the same payee. In the preferred embodiment, entries in the consumer data database 84 and the consumer/payee database 86 are keyed to each other, entries in the consumer/payee database 86 and the master payee list database 90 are keyed to each other, and entries in the master payee list database 90 and the biller remittance data database 92 are keyed to each other. Thus, with reference to any entry or record stored in any of the four databases, the corresponding entries or records located in any of the other databases may be located.

In an additional departure from the prior art, data in the master payee list database 90 is shared with the consumers 52 via the payee data entry module 82. This is advantageous for the EBPP system 80 since it will generate additional bill payment business for the service provider operating the EBPP system 80. It will also facilitate acceptance by the consumers 52, since the inclusion of more payees which are pertinent to a large number of the consumers 52 allows the consumers 52 to select or parse from preexisting payee entries rather than entering the data manually.

The EBPP system 80 also has a data cleanup module 94, which provides a support and administrative function which serves to consolidate entries in the various databases and link them together if entries in multiple databases relate to the same payees. Thus, the data cleanup module 94 will serve to review new entries to determine whether information entered by the consumers 52 into the consumer/payee database 86 can be linked to information on payees existing in the master payee list database 90 and the biller remittance data database 92.

Consumer data from the consumer data database 84, consumer/payee data from the consumer/payee database 86, the master payee list from the master payee list database 90, and biller remittance information from the biller remittance data database 92 are provided to a bill payment construction module 96. Payment requests, which are requests regarding payment of specific bills on behalf of specific consumers 52, are also provided by the consumers 52 to the bill payment construction module 96. The bill payment construction module 96 creates payment instructions and remittance advices and provides the instructions and advices to the payment processors 66. It will be appreciated by those skilled in the art that any given bill payment instruction may include data from two or even all three of the consumer/payee database 86, the master payee list database 90, and the biller remittance data database 92.

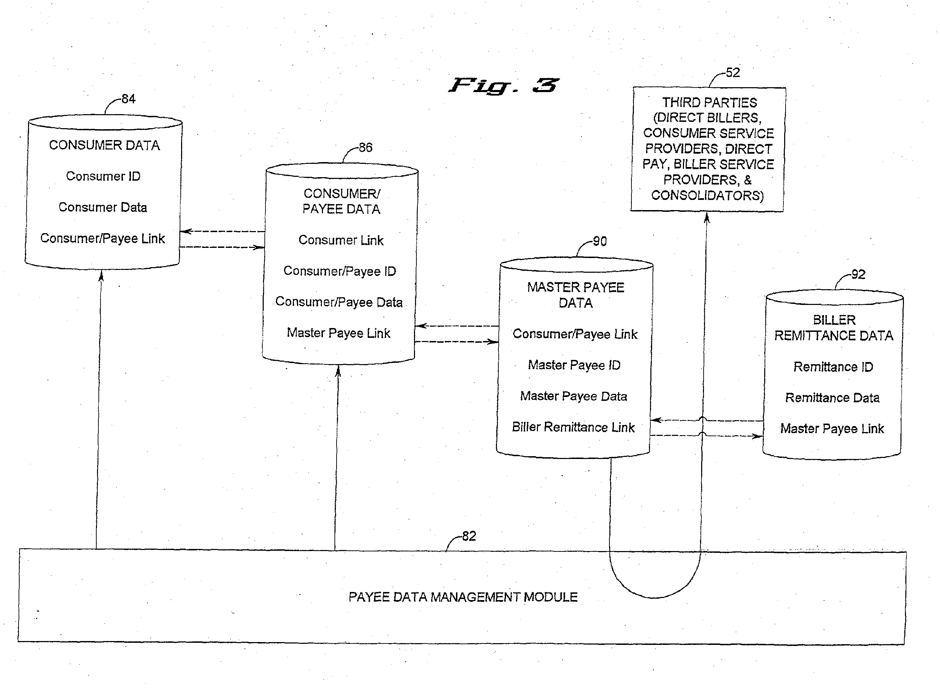

Referring next to Fig. 3, the linkages between the four databases used by the payee information management system of the present invention are illustrated, together with generic labeling of the types of data included in each of the databases. The consumer data database 84 contains entries which each may include a consumer ID, consumer data, and one or more consumer/payee links. A consumer/payee link is a link which enables the system to link to a particular entry in the consumer/payee database 86.

Typically, each consumer will have multiple consumer/payee entries, and therefore each entry in the consumer data database 84 will be linked to multiple entries in the consumer/payee database 86. Each entry in the master payee list database 90 will also point to multiple entries in the consumer/payee database 86, and therefore there will be multiple links between each entry in the master payee list database 90 and entries in the consumer/payee database 86. An entry in the biller remittance data database 92 may also point to multiple entries in the master payee list database 90, and therefore there may be multiple links between an entry in the biller remittance data database 92 and entries in the master payee list database 90. However, each entry in the consumer/payee database 86 will point to only one entry in the consumer data database 84, each entry in the consumer/payee database 86 will point to only one entry in the master payee list database 90, and each entry in the master payee list database 90 will point to only one entry in the biller remittance data database 92.

As for the consumer/payee database 86, it includes a consumer link, a consumer/payee ID, consumer/payee data, and a master payee link. The consumer link is a link which enables the system to link to a particular entry in the consumer data database 84, and the master payee link is a link which enables the system to link to a particular entry in the master payee list database 90. All of the data other than the links contained in the consumer data database 84 and the consumer/payee database 86 is entered by consumers, and is not changed by the payee information management system of the present invention.

The master payee list database 90 includes a consumer/payee link, a master payee ID, master payee data, and a biller remittance link. The consumer/payee link is a link which enables the system to link to a particular entry in the consumer/payee database 86. The biller remittance link is a link which enables the system to link to a particular entry in the biller remittance data database 92. As mentioned previously, the information contained in the master payee list database 90 is information which could be derived in its entirety from bills provided by billers. This information is shared with the consumers 52 (which are shown in Fig. 3 in an abbreviated format) via the payee data entry module 82, as illustrated.

The biller remittance data database 92 contains a remittance ID, remittance data, and a master payee link. The master payee link is a link which enables the system to link to a particular entry in the master payee list database 90. The information contained in the biller remittance data database 92 is proprietary to the payee information management system of the present invention, and is not shared with any entity outside the EBPP system 80 (shown in Fig. 2). This information, which is developed by the payee information management system of the present invention, is the key to enabling the efficient and cost-effective payment of bills by the payee information management system.

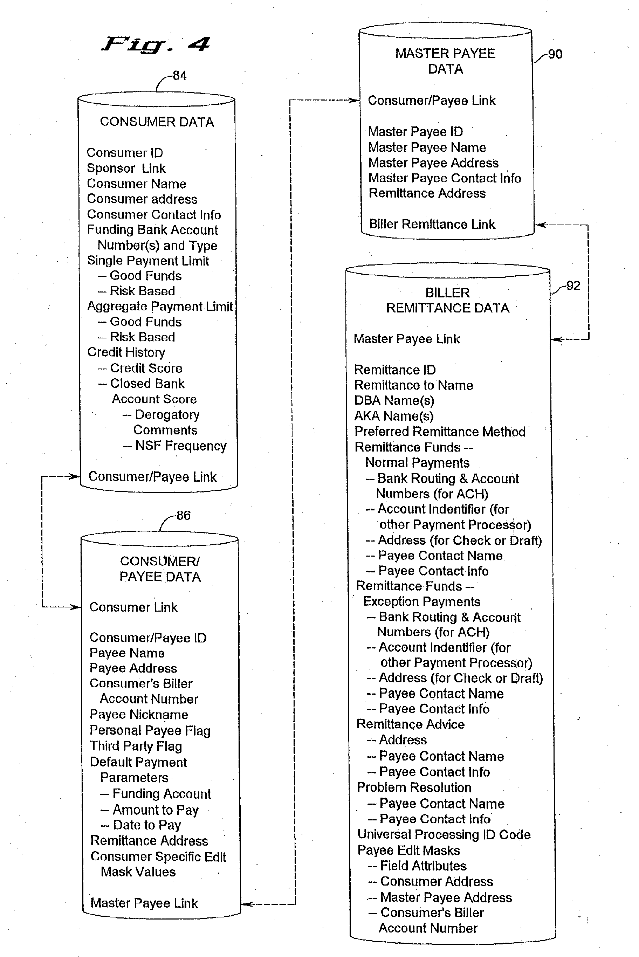

Referring now to Fig. 4, examples of the types of data which may, for example, be included in each of the four databases (the consumer data database 84, the consumer/payee database 86, the master payee list database 90, and the biller remittance data database 92). It should initially be noted that these types of data are not exclusive, but rather are shown for exemplary purposes. Accordingly, additional data fields could be included in each of the four databases, or some of the data fields shown in Fig. 4 could be deleted from the databases.

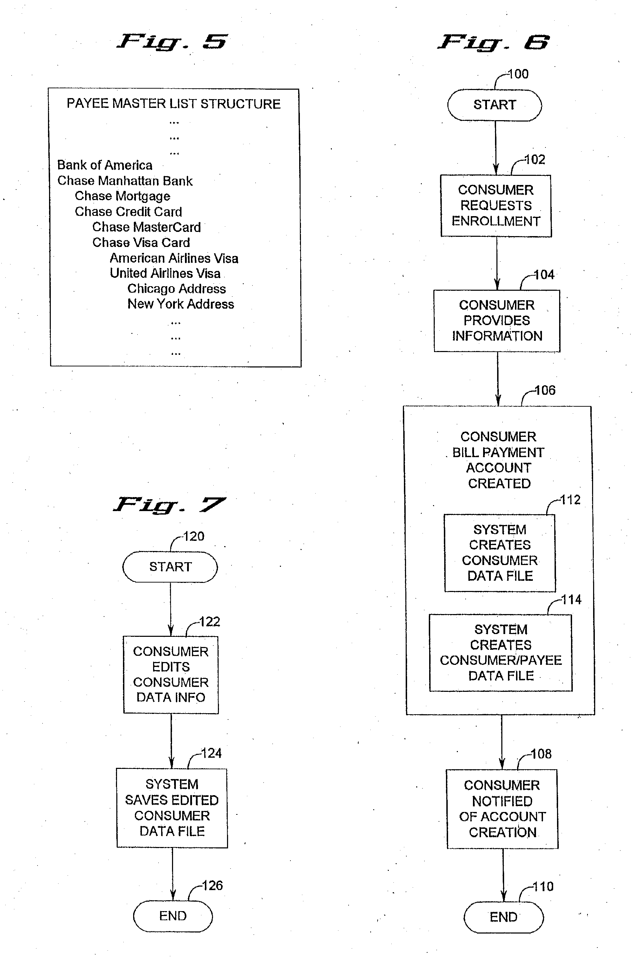

Referring next to Fig. 5, an example of a hierarchical data structure which may be used for the data contained for the biller remittance data database 92 is illustrated. The data structure is organized first by company (two banks are shown), then by entity under each company (types of account), then by subentity under each entity, etc. In the example shown, there are five different levels of classification for the payees, although those skilled in the art will realize that more or fewer levels of classification could be used as well. In the example illustrated, the five levels (and examples of each) are company name (Chase Manhattan Bank), type of financial account (credit card), types of credit card (Chase Visa Card), labeling of credit card (United Airlines Visa Card), and payment address (Chicago address).

Referring now to Fig. 6, the process by which a consumer 52 (shown in Fig. 2), which may be any one of the different types of consumer (the direct billers 54, the consumer service providers 56, the direct pay providers 58, the biller service providers 60, or the third party consolidators 62, all of which are shown in Fig. 2), enrolls in the payee information management system of the present invention and files for the consumer 52 are created in the consumer data database 84 and the consumer/payee database 86. The process begins in a process initiation step 100, with the consumer requesting enrollment in for bill payment in a consumer requests enrollment step 102. The consumer is prompted to provide information about himself/herself/itself, and provides such information, in a consumer provides information step 104.

Next, a bill payment account for the consumer 52 will be created in a consumer account creation step 106, following which the consumer 52 will be notified of the creation of the bill payment account in a consumer notification step 108, with the process then terminating in a process termination step 110. In the context of the payee information management system of the present invention, the consumer account created step 106 includes two internal steps, the first of which is a create consumer data entry step 112 in which an entry is created for the particular customer 52 in the consumer data database 84 (shown in Fig. 2). The second internal step is a create customer/payee entry step 114, in which an entry is created in the consumer/payee database 86 (shown in Fig. 2) for each particular payee of the particular customer 52. It will be apparent to those skilled in the art that while a single entry for a particular customer 52 is created in the consumer data database 84, a separate entry is created for each payee of the customer 52 in the consumer/payee database 86.

Referring next to Fig. 7, the process by which a consumer 52 may edit consumer data previously provided and stored in the consumer data database 84 (shown in Fig. 2) of the payee information management system of the present invention is illustrated, beginning in a process initiation step 120. The consumer data information will be displayed to the consumer 52 and edited by the consumer 52 in an edit consumer data step 122. When the consumer 52 has finished editing the consumer data, it is then saved into the consumer data database 84 (shown in Fig. 2) in a save edited consumer data step 124, after which the process ends in a process termination step 126.

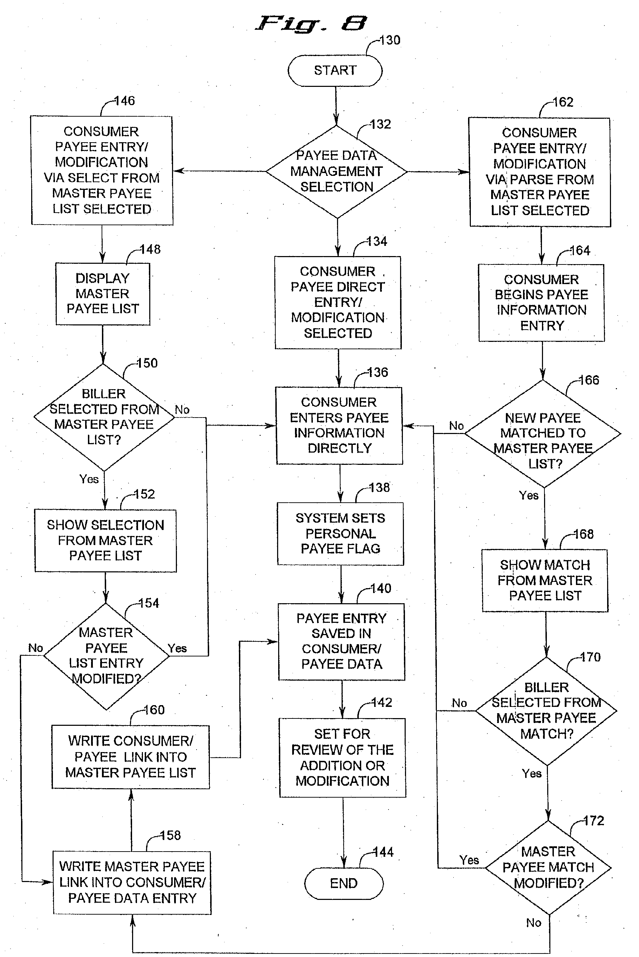

Referring now to Fig. 8, the process by which a consumer 52 can enter or modify consumer/payee information stored in the consumer/payee database 86 (shown in Fig. 2) of the payee information management system of the present invention is illustrated, beginning in a process initiation step 130. The consumer 52 is presented with an initial option in a payee data management selection determination step 132 as to whether the consumer 52 would like to directly enter payee information, select from a list of payees, or parse by beginning to type the payee information and then selecting a payee that is matched based on the information typed. If the consumer 52 elects to directly enter payee information, the process moves to a payee direct entry step 134.

The consumer 52 then enters payee information directly in a payee information direct entry step 136. Next, the payee information management system will set a personal payee flag in a set personal payee flag step 138, indicating that the consumer 52 has directly entered the payee information rather than selecting from an existing payee. The payee information is then saved in a save payee entry step 140, with the newly saved entry being indicated for review of the added or modified entry in a set review step 142. The process then terminates in a process termination step 144.

Returning to the payee data management selection determination step 132, if the consumer 52 elects to select from a list of payees, the process moves to a select from master list entry step 146. The payee information management system then displays the master payee list in a display master payee list step 148. The consumer 52 is then allowed to either select a payee from the master payee list or enter payee information directly, as determined by a select from master payee list determination step 150. If the consumer 52 enters payee information directly, the process moves to the payee information direct entry step 136.

If, on the other hand, the consumer 52 selects an entry from the master payee list in the master payee list determination step 150, the process moves to a show selection step 152 in which information relating to a payee selected from the master payee list is displayed for the consumer 52. The process then moves to an entry modified determination step 154 from which if the entry from the master payee list has been modified, the process will move to the payee information direct entry step 136.

If, on the other hand, the entry from the master payee list has not been modified, a master payee link will be written into the entry for the payee in the consumer/payee database 86 in a write master payee link step 158. Following this step, a consumer/payee link will be written into the entry for the chosen payee in the master payee list database 90 in a write consumer/payee link step 160, following which the process moves to the save payee entry step 140.

Returning again to the payee data management selection determination step 132, if the consumer 52 elects to parse by beginning to type the payee information and then selecting a payee that is matched based on the information typed, the process moves to a parse from master list step 162. In this process, the consumer 52 begins to type in a payee entry in a consumer begins payee entry step 164. Next, a determination is made as to whether the partial payee information entered can be matched to a payee on the master list in a match payee determination step 166. If there is no match, the process would move to the payee information direct entry step 136. In the preferred embodiment, the process will not finish with the match payee determination step 166 until the payee information has been completely typed in.

If, on the other hand, there is a match in the match payee determination step 166, the process will move to a show match step 168 in which the payee information relating to the payee parsed from the master payee list is displayed for the consumer 52. The process then moves to a biller selected determination step 170 in order to determine whether or not a biller has been selected from the master payee list. If the consumer 52 instead enters a payee not found in the master payee list, the process will move to the payee information direct entry step 136. If, on the other hand, the consumer 52 selects a payee from the master payee list, the process then moves to a master payee modified determination step 172. If the payee from the master payee list is modified by the consumer 52, the process will move to the payee information direct entry step 136. If, on the other hand, the payee from the master payee list is not modified, the process moves to the write master payee link step 158.

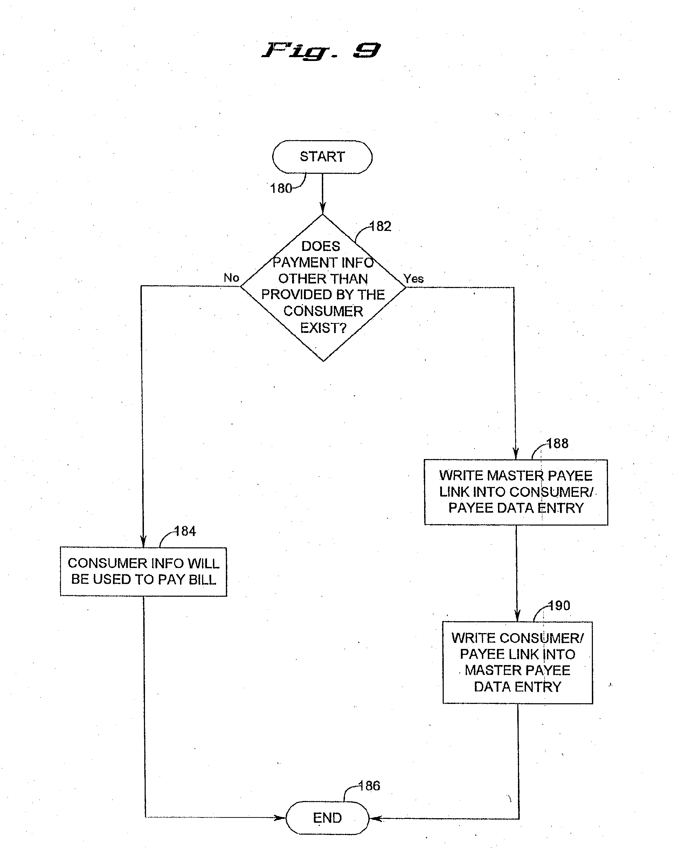

Referring next to Fig. 9, a manual review process by which the payee administration function 88 (shown in Fig. 2) may evaluate payee information and modify consumer/payee and master payee entries to create cross links therebetween is illustrated. The process begins at a process initiation step 180, and moves in a does other payment information exist determination step 182 to determine whether or not the payee information management system has any payment information other than the consumer/payee information provided by the consumer and stored in the consumer/payee database 86 (shown in Fig. 2). If the payee information management system has no other payment information, the process moves to a use consumer information to pay bill step 184 in which the bill will be paid using the consumer/payee information, following which the process will end in a process termination step 186.

Returning to the does other payment information exist determination step 182, if, on the other hand, it is determined that the payee information management system has payment information (which would be contained in the master payee list database 90 shown in Fig. 2) in addition to that contained in the consumer/payee database 86 (also shown in Fig. 2), the system will move instead to a write master payee link step 188 in which a master payee link will be written into the consumer/payee entry in the consumer/payee database 86. Next, the process moves to a write consumer/payee link step 190 in which a consumer/payee link will be written into the master payee entry in the master payee list database 90. The process then terminates in the process termination step 186.

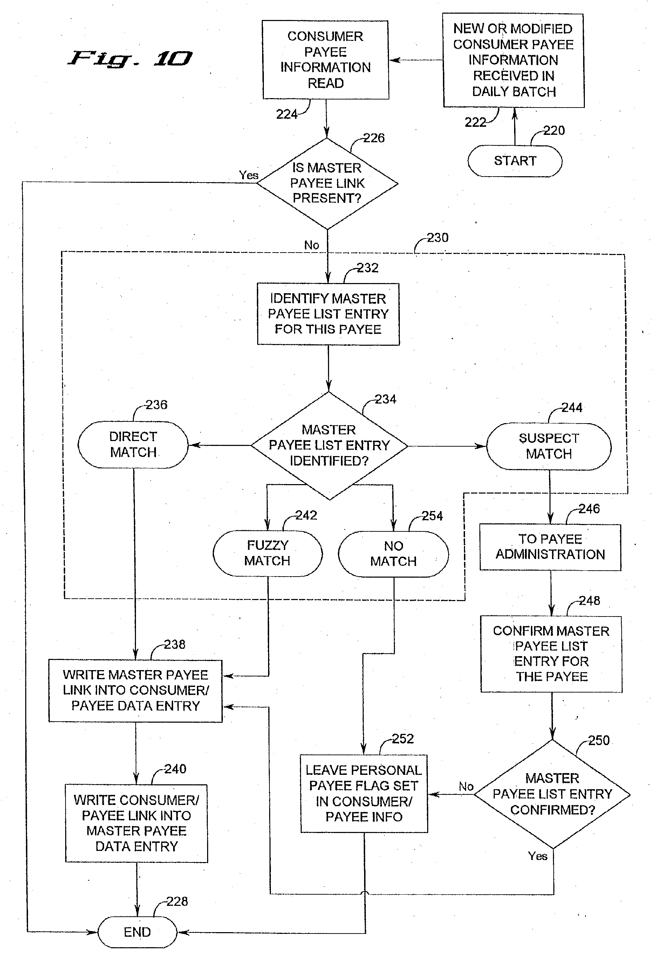

Referring now to Fig. 10, the process by which the data cleanup module 94 (shown in Fig. 2) matches payees described by payee information entered by consumers with payees included in the master payee database is illustrated. The process begins at a process initiation step 220, and moves in a receive daily batch of consumer/payee information step 222 in which the payee information management system periodically (preferably once a business day) receives all consumer/payee information which has been entered since the last time the operation in Fig. 10 has been performed. Each entry of consumer/payee information is read in a consumer/payee information read step 224.

The process then moves to a master link presence determination step 226 in which it is determined whether or not a master payee link is present in the consumer/payee information. If there is a master data link present, there is no need for further processing, and the process moves to process termination step 228 and ends. If, on the other hand, a master payee link is not present in the consumer/payee data, the system instead moves to a master payee list matching process 230. The first step in the master payee list identification process 230 is to attempt to identify the master payee list entry for the payee from the consumer/payee information in an identify master payee list entry step 232.

A determination as to whether a match of the payee from the consumer/payee information and a payee in the master payee list is made in a match determination step 234. There are four different potential outcomes in the match determination step 234, namely a direct match, a fuzzy match, a suspect match, and no match. The first of these outcomes is shown as a direct match step 236, in which the match is complete and unconditional. Following the direct match step 236, the process moves to a write master payee link step 238 in which a master payee link will be written into the consumer/payee entry in the consumer/payee database 86 (shown in Fig. 2). Next, the process moves to a write consumer/payee link step 240 in which a consumer/payee link will be written into the master payee entry in the master payee list database 90 (shown in Fig. 2). The process then ends in the process termination step 228,.

Returning to the match determination step 234, the second outcome is shown as a fuzzy match step 242, in which the match, while not complete and absolute, is so close that virtually no question exists that the match is not correct. Following the fuzzy match step 242, the process moves to the write master payee link step 238.

Returning again to the match determination step 234, the third outcome is shown as a suspect match step 244 in which the match is made but is in sufficient doubt so as to require further review and analysis to ensure that it is correct. Following the suspect match step 244, the process moves to a payee administration forwarding step 246 in which the suspect match is forwarded to the payee administration function 88 (shown in Fig. 2) for review and confirmation in a confirm master payee list entry step 248. If the payee administration function 88 confirms the match in a master payee list confirmation step 250, the process moves to the write master payee link step 238. If, on the other hand, it is determined in the master payee list confirmation step 250 that the match is incorrect or uncertain, the process moves to a leave personal payee flag set step 252 in which the personal payee flag is left set to indicate that the payee is not included in the master payee list, following which the process ends in the process termination step 228.

Returning once again to the match determination step 234, the fourth outcome is shown as a no match step 254. In this case, the process moves to the leave personal payee flag set step 252 in which the personal payee flag is left set to indicate that the payee is not included in the master payee list, following which the process ends in the process termination step 228.

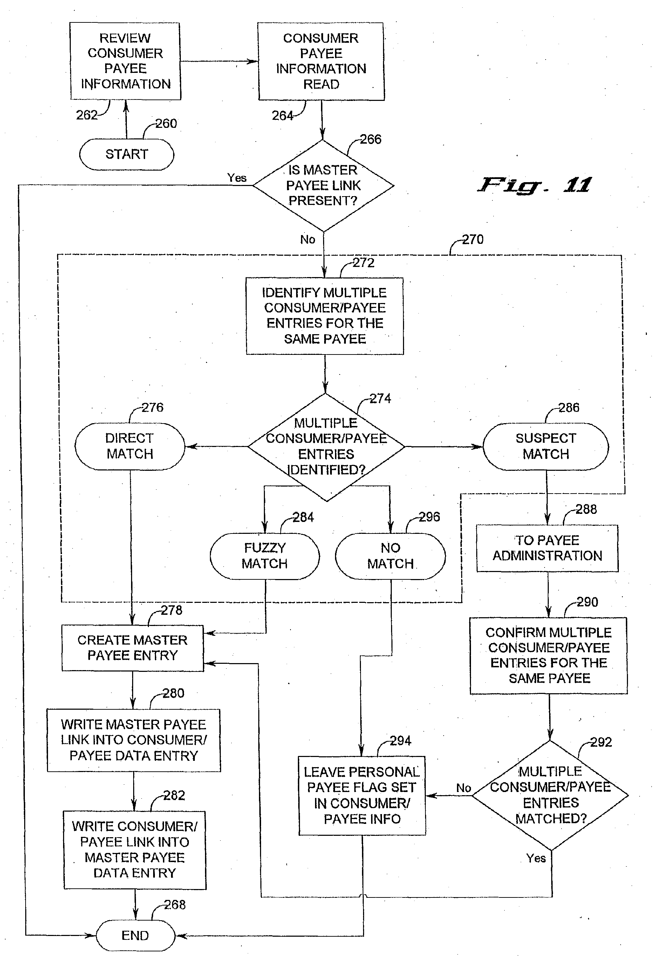

Referring next to Fig. 11, the process by which the data cleanup module 94 (shown in Fig. 2) consolidates identical payees described by consumer/payee information is illustrated. The process begins at a process initiation step 260, and moves in a review consumer/payee information step 262 in which the payee information management system periodically reviews all consumer/payee information in order to consolidate entries to the degree possible. The consumer/payee information is read in a consumer/payee information read step 264.

The process then moves to a master link determination step 266 in which it is determined whether or not a master payee link is present in the consumer/payee entry being reviewed. If there is a master data link present, there is no need for further processing, and the process moves to a process termination step 268 and ends. If, on the other hand, a master payee link is not present in the consumer/payee entry, the system instead moves to a master payee list matching process 270. The first step in the master payee list identification process 270 is to attempt to identify the master payee list entry for the payee from the consumer/payee entry in an identify master payee list entry step 272.

A determination as to whether a match of the payee from the consumer/payee entry and a payee in the master payee list is made in a match determination step 274. There are four different potential outcomes in the match determination step 274, namely a direct match, a fuzzy match, a suspect match, and no match. The first of these outcomes is shown as a direct match step 276, in which the match is complete and unconditional. Following the direct match step 276, the process moves to a create master payee entry step 278 in which a master payee entry will be written into the master payee list database 90 (shown in Fig. 2). Next, the process moves to a write master payee link step 280 in which a master payee link will be written into the consumer/payee entry in the consumer/payee database 86 (shown in Fig. 2). The process then moves to a write consumer/payee link step 282 in which a consumer/payee link will be written into the master payee entry in the master payee list database 90, and the process then ends in a process termination step 228.

Returning to the match determination step 274, the second outcome is shown as a fuzzy match step 284, in which the match, while not complete and absolute, is so close that virtually no question exists that the match is not correct. Following the fuzzy match step 284, the process moves to the create master payee entry step 278.

Returning again to the match determination step 274, the third outcome is shown as a suspect match step 286 in which the match is made but is in sufficient doubt as to require further review and analysis to ensure that it is correct. Following the suspect match step 286, the process moves to a payee administration forwarding step 288 in which the suspect match is forwarded to the payee administration function 88 (shown in Fig. 2) for review and confirmation in a confirm multiple entries for the same payee step 290. If the payee administration function 88 confirms the match in a multiple entry match confirmation step 292, the process moves to the create master payee entry step 278. If, on the other hand, it is determined in the multiple entry match confirmation step 292 that the match is incorrect or uncertain, the process moves to a leave personal payee flag set step 294 in which the personal payee flag is left set to indicate that the payee has not been identified as a multiple consumer/payee entry, following which the process ends in the process termination step 268.

Returning once again to the match determination step 274, the fourth outcome is shown as a no match step 296. In this case, the process moves to the leave personal payee flag set step 294 in which the personal payee flag is left set to indicate that the payee is not a multiple consumer/payee entry, following which the process ends in the process termination step 268.

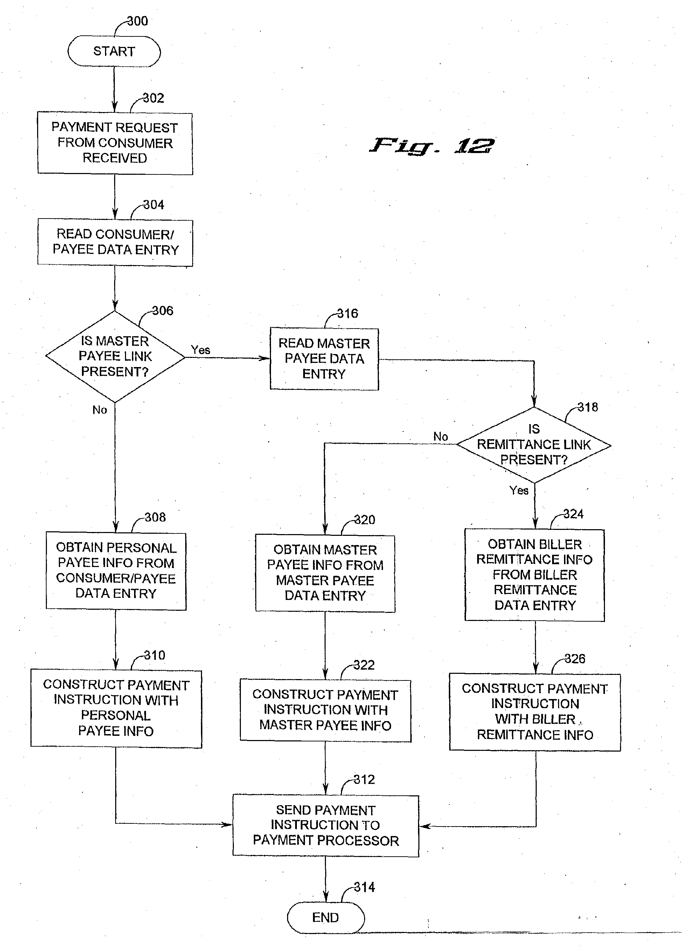

Referring now to Fig. 12, the process by which the bill payment construction module 96 of the payee information management system illustrated in Fig. 2 fulfills a consumer payment request using payee information from the various databases is illustrated. The process begins at a process initiation step 300, and moves to a payment request received step 302 in which a consumer requests the payment of a bill to a payee. The payee information management system then reads the consumer/payee entry for the designated payee from the consumer/payee database 86 (shown in Fig. 2) in a read consumer/payee data step 304.

The payee information management system of the present invention then checks to determine whether a master payee link is present in the consumer/payee data entry in a master payee link presence determination step 306. If a master payee link is not present, the system moves to an obtain personal payee information step 308 in which the personal payee information for the designated payee is obtained from the consumer/payee database 86 (shown in Fig. 2). The payee information management system then constructs the bill payment instruction with the retrieved personal payee information in a construct payment step 310, and sends the payment construction to the appropriate payment processor in a send payment step 312. The process then terminates in a process termination step 314.

Returning to the master payee link presence determination step 306, if, on the other hand, a master payee link is found to be present, the system moves to a read master payee entry step in which the data from the corresponding master payee entry is read from the master payee list database 90 (shown in Fig. 2) in a read master payee data entry step 316. The payee information management system then checks to determine whether a remittance link is present in the master payee data entry in a remittance link presence determination step 318. If a remittance link is not present, the system moves to an obtain master payee information step 320 in which the master payee information for the designated payee is obtained from the master payee list database 90. The payee information management system then constructs the bill payment instruction with the retrieved master payee information in a construct payment step 322, and sends the payment construction to the appropriate payment processor in the send payment step 312.

Returning to the remittance link presence determination step 318, if, on the other hand, a remittance link is present, the system moves to an obtain biller remittance information step 324 in which the biller remittance information for the designated payee is obtained from the biller remittance data database 92 (shown in Fig. 2). The payee information management system then constructs the bill payment instruction with the retrieved biller remittance information in a construct payment step 326, and sends the payment construction to the appropriate payment processor in the send payment step 312.

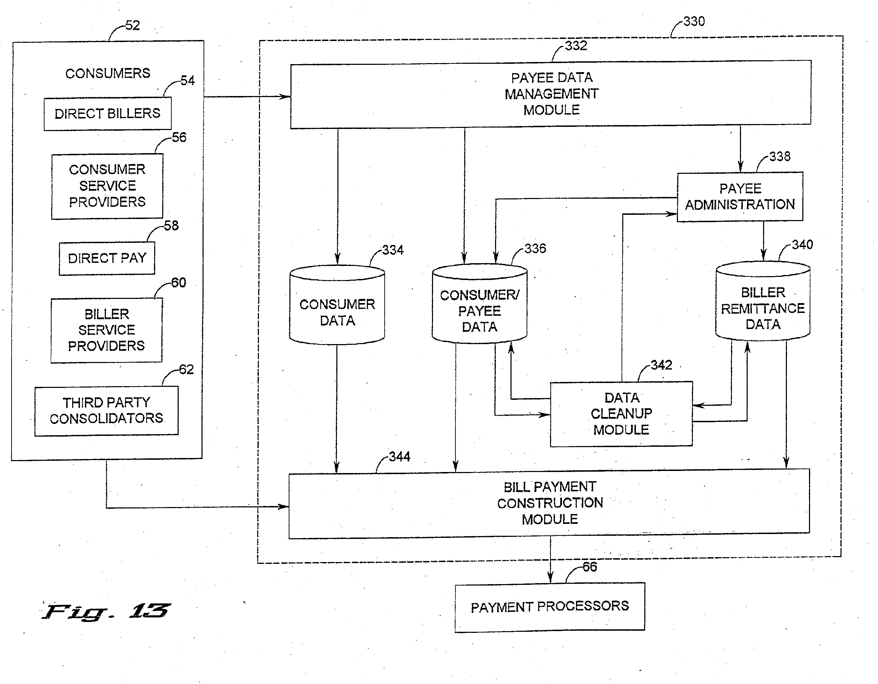

Referring finally to Fig. 13, an alternate embodiment of the payee information management system of the present invention shown in Fig. 2 which omits the master payee list database 90 is illustrated. An EBPP system 330 replaces the EBPP system 80 of Fig. 2, and may be seen to have similar components contained therein, but without the master payee list database 90. Like the EBPP system 80, the EBPP system 330 also interacts with the consumers 52 and the payment processors 66. The EBPP system 330 contains a payee data entry module 332 which obtains consumer data and consumer/payee data from the consumers 52.

The consumer data, provided by the consumers 52 to the payee data entry module 332, is then provided from the payee data entry module 332 to a consumer data database 334 for storage therein. The consumer/payee data, also provided by the consumers 52 to the payee data entry module 332, is then provided from the payee data entry module 332 to a consumer/payee database 336. A payee administration function 338 serves to review and correct errors in newly added consumer/payee data.

Payee remittance data which is developed by the payee administration function 338 will be supplied to a biller remittance data database 340 for storage therein. It will at once be appreciated that data which was at one time stored in a single database (namely the consumer/payee and remittance data database 74 of Fig. 1) is now stored in two separate databases, namely the consumer/payee database 336 and the biller remittance data database 340. The alternate embodiment payee information management system illustrated in Fig. 13 does not, however, have a master payee list database 90 (shown in Fig. 2).

In order to synchronize data between the two databases, the payee administration function 338 will also automatically key entries in the consumer/payee database 336 and the biller remittance data database 340 to each other. Since entries in the consumer data database 334 and entries in the consumer/payee database 336 are also keyed to each other, with reference to any entry or record stored in any of the three databases, the corresponding entry or record located in any of the other databases may be located.

The EBPP system 330 also has a data cleanup module 342, which provides a support and administrative function which serves to identify entries in the consumer/payee database if the entries relate to the same payees. Thus, the data cleanup module 342 will serve to review new entries to determine whether information entered by the consumers 52 into the consumer/payee database 336 can be linked to information on payees existing in the biller remittance data database 340.

Consumer data from the consumer data database 334, consumer/payee data from the consumer/payee database 336, and biller remittance information from the biller remittance data database 340 are provided to a bill payment construction module 344. Payment requests regarding payment of specific bills on behalf of specific consumers 52 are also provided by the consumers 52 to the bill payment construction module 344. The bill payment construction module 344 creates payment instructions and remittance advices and provides the payment instructions and the remittance advices to the payment processors 66.

It may therefore be appreciated from the above detailed description of the preferred embodiment of the present invention that it teaches a payee information management system which maintains proprietary biller remittance information in a database which is separate from the database containing consumer/payee information which has been provided by consumers. The payee information management system of the present invention eliminates the need to place remittance information in entries for each payee of each consumer, thereby making the consumer/payee database substantially smaller and more efficient. The payee information management system of the present invention also does not require double fields to be contained in the consumer/payee database, thereby further minimizing the size of the consumer/payee database.

The payee information management system of the present invention allows all consumer-entered information to remain in the consumer/payee database rather than replacing any of it, thereby preventing consumer confusion and thereby minimizing calls to customer service. The payee information management system of the present invention makes existing payee data accessible to consumers to allow them to select from, or parse to, previously known payees or modify information from such known payee entries rather than always require them to enter all information about each payee. The payee information management system of the present invention also has a standard set of payee data which is available to send to third parties such as consumer service providers, direct pay providers, biller service providers, and consolidators to thereby obtain further bill payment business without requiring that proprietary biller remittance information be divulged.

The payee information management system of the present invention is highly reliable and stable, and will also provide the highest possible degree of security during its normal operation. Further, the payee information management system has no degradation in consumer experience while maintaining security, usability, and control over proprietary information. The payee information management system will contribute to higher efficiencies and lower costs in payment processing due to an increased proportion of electronic payments, cleaner payee data, and less consumer confusion. The payee information management system of the present invention is also inexpensive to implement to enhance its market appeal and to thereby afford it the broadest possible market. Finally, all of the aforesaid advantages and objectives of the payee information management system of the present invention are achieved without incurring any substantial relative disadvantage.

Although an exemplary embodiment of the payee information management system of the present invention has been shown and described with reference to particular embodiments and applications thereof, it will be apparent to those having ordinary skill in the art that a number of changes, modifications, or alterations to the invention as described herein may be made, none of which depart from the spirit or scope of the present invention. All such changes, modifications, and alterations should therefore be seen as being within the scope of the present invention.

## Claims

1. A method of managing information relating to a plurality of payees for an electronic bill payment system, said method comprising steps of:
saving consumer/payee information in a consumer/payee database, wherein said consumer/payee information includes payee remittance information which is obtained from consumers;
storing proprietary payee remittance information in a biller remittance database;
receiving requests from consumers to pay bills to designated payees contained in said consumer/payee database;
creating a bill payment instruction for each request from a consumer to pay a bill based upon payee remittance information contained in said biller remittance database if payee remittance information for the designated payee exists in said biller remittance database, or based upon payee remittance information contained in said consumer/payee database if payee remittance information for the designated payee does not exist in said biller remittance database; and
sending bill payment instructions which have been created to a bill payment processor for execution by said bill payment processor.

2. A method as defined in Claim 1, wherein said method additionally comprises:
storing master payee information in a master payee database, wherein said master payee information includes payee remittance information which is available from payee billing statements; and
creating said bill payment instruction for each request from a consumer to pay a bill based upon master payee information contained in said master payee database if payee remittance information for the designated payee does not exist in said biller remittance database and if payee remittance information for the designated payee exists in said master payee database, and creating a bill payment instruction to pay the bill based upon consumer/payee information contained in said consumer/payee database only if payee remittance information for the designated payee does not exist in either said biller remittance database or said master payee database.

3. A method as defined in Claim 2, wherein master payee information contained in said master payee database is provided to third parties.

4. A method as defined in Claim 2, wherein said storing step comprises:
obtaining payee remittance information from payee billing statements and storing said payee remittance information in said master payee database; and
matching entries for payees contained in said master payee database with entries for the same payees contained in said consumer/payee database.

5. A method as defined in Claim 4, additionally comprising:
matching entries for payees contained in said master payee database with entries for the same payees contained in said biller remittance database, or additionally comprising:
providing links in said entries for payees in said master payee database and said consumer/payee database to link entries in said master payee database and said consumer/payee database; and
providing links in said entries for payees in said master payee database and said biller remittance database to link entries in said master payee database and said biller remittance database.

6. A method as defined in Claim 2, additionally comprising:
storing consumer information in a consumer data database, wherein said consumer information relates to and is obtained from consumers;
providing links in said entries in said consumer data database and said consumer/payee database to link entries in said consumer data database and said consumer/payee database;
providing links in said entries for payees in said master payee database and said consumer/payee database to link entries in said master payee database and said consumer/payee database; and
providing links in said entries for payees in said master payee database and said biller remittance database to link entries in said master payee database and said biller remittance database, or wherein said biller remittance database includes payee remittance information enabling electronic payments to be made to at least some payees, or additionally comprising:
periodically reviewing consumer/payee information to determine whether entries in said consumer/payee database can be matched with entries in said biller remittance database or said master payee database, or additionally comprising:
periodically reviewing entries in said master payee database to determine whether multiple entries can be consolidated into a single entry, or
wherein bill payment instructions may be created using payee remittance information from at least two of said biller remittance database, said master payee database, and said consumer/payee database.

7. A method as defined in Claim 1, wherein bill payment instructions may be created using payee remittance information from both said biller remittance database and said consumer/payee database, or additionally comprising:
matching entries for payees contained in said consumer/payee database with entries for the same payees contained in said biller remittance database.

8. A method as defined in Claim 1, wherein said saving step comprises:
providing a plurality of potential payees and allowing consumers to select payees whom they wish to pay using the electronic bill payment system from said plurality of potential payees; and
entering payees selected from said plurality of payees by consumers into said consumer/payee database and associating the selected payees with the customers who have selected them.

9. A method as defined in Claim 8, wherein said plurality of potential payees which consumers may select are stored in a master payee database, or
wherein said plurality of potential payees are presented to consumers in a hierarchical structure to allow said consumers to easily and conveniently locate and select payees whom the consumers wish to pay using the electronic bill payment system.

10. A method as defined in Claim 8, wherein said electronic bill payment system displays information, based on parsing data entered by consumers, relating to each of said plurality of potential payees to consumers to enable consumers to select payees whom the consumers wish to pay using the electronic bill payment system, and preferably wherein consumers may modify information relating to payees selected from said plurality of potential payees, in each instance such modified payee information being stored in said consumer/payee database in association with the consumer who modified it.

11. A method as defined in Claim 1, wherein said saving step comprises:
consumers entering information relating to payees whom the consumers wish to pay using the electronic bill payment system.

12. A method as defined in Claim 11, wherein said saving step further comprises:
prompting consumers to enter specific types of information about each payee; and
storing information entered by consumers in said consumer/payee database and associating the stored information with the customer who has entered it, or wherein said saving step comprises:
prompting consumers to enter the name of payees whom they wish to pay using the electronic bill payment system, and additional information about each payee; and
entering payees provided by consumers into said consumer/payee database and associating the payees so entered with the customers who have provided them, or wherein said saving step comprises:
allowing consumers to enter the name of any payee whom they wish to pay using the electronic bill payment system, and sufficient information to enable the electronic bill payment system to pay the payee so entered; and
storing information relating to the payee entered by consumers in said consumer/payee database and associating the stored information with the customer who has entered it.

13. A method as defined in Claim 1, wherein said storing step comprises:
determining if payee remittance information other than payee remittance information provided by a consumer is available for each payee contained in said consumer/payee database;
if payee remittance information other than payee remittance information provided by a consumer is available for a payee contained in said consumer/payee database, determining whether said payee remittance information other than payee remittance information provided by a consumer is preferred to the payee remittance information for said payee provided by a consumer; and
if payee remittance information other than payee remittance information provided by a consumer is preferred to the payee remittance information for said payee provided by a consumer, entering said payee remittance information other than payee remittance information provided by a consumer into said biller remittance database, and preferably wherein if payee remittance information other than payee remittance information provided by a consumer is not preferred to the payee remittance information for said payee provided by a consumer, no remittance information for said payee is entered into said biller remittance database.

14. A method as defined in Claim 1, wherein said biller remittance database includes payee remittance information enabling electronic payments to be made to at least some payees, or additionally comprising:
periodically reviewing consumer/payee information to determine whether entries in said consumer/payee database can be matched with entries in said biller remittance database.

15. A method as defined in Claim 1, wherein said method additionally comprises:
if payee remittance information for the designated payee does not exist in said biller remittance database, determining whether payee remittance information exists in said master payee database for the designated payee to which a request from a consumer to pay a bill has been received;
if payee remittance information for the designated payee does not exist in said biller remittance database and payee remittance information for the designated payee does exist in said master payee information, creating a bill payment instruction for the request from a consumer to pay a bill based upon master payee information contained in said master payee database; and
if payee remittance information for the designated payee does not exist in said biller remittance database and payee remittance information for the designated payee does not exist in said master payee information, creating a bill payment instruction for the request from a consumer to pay a bill based upon consumer/payee information contained in said consumer/payee database.

16. A method as defined in Claim 1, wherein said proprietary payee remittance information is stored as a first data set which is accessible only by the electronic bill payment system; and
said master payee information is stored as a second data set, wherein said master payee information includes remittance information obtained from payee statements;
said consumer/payee information is stored as a third data set, wherein said consumer/payee information includes payee remittance information which is obtained from consumers;
establishing links between at least two pairs of said first, second, and third data sets;
wherein payee remittance information used in paying bills to designated payees is available from the first of said first, second, and third data sets in which payee remittance information is available for the designated payees.

17. A system for managing information relating to a plurality of payees in an electronic bill payment system, said system comprising:
a consumer/payee database storing consumer/payee information which includes payee remittance information obtained from consumers;
a biller remittance database storing payee remittance information which is accessible only by the electronic bill payment system;
a bill payment construction element which receives requests from consumers to pay bills to payees contained in said consumer/payee database, said bill payment construction element creating a bill payment instruction for each request from a consumer to pay a bill based upon payee remittance information contained in said biller remittance database if payee remittance information for the payee exists in said biller remittance database, said bill payment construction element creating a bill payment instruction for each request from a consumer to pay a bill based upon payee remittance information contained in said consumer/payee database if payee remittance information for the payee does not exist in said biller remittance database, said bill payment construction element sending bill payment instructions which have been created to a bill payment processor.

18. A system as defined in Claim 17, said system additionally comprises;
a master payee database storing payee remittance information which is available from payee billing statements;
said bill payment construction element creates a bill payment instruction for each request from a consumer to pay a bill based upon master payee information contained in said master payee database if payee remittance information for the payee does not exist in said biller remittance database and payee remittance information for the payee exists in said master payer database; and
said bill payment construction element creates a bill payment instruction for each request from a consumer to pay a bill based upon payee remittance information contained in said consumer/payee database if payee remittance information for the payee does not exist in said biller remittance database or in said master payee database.

19. A computer program comprising instructions for implementing a method as claimed in any of claims 1 to 16.

20. A computer readable medium storing or representing a computer program as claimed in claim 19.

21. A computer configured to implement a program as claimed in claim 19.

22. A consumer/payee database, master payee database, or biller remittance database for use in a system or method as claimed in any proceedings claim.
